# EUROPEAN PATENT APPLICATION

(11) **EP 4 207 900 A1**
(43) Date of publication of application: **05.07.2023**
(21) Application number: 20957173.6
(22) Date of filing: 15.10.2020
(51) Int. Cl.: H04W 72/04

(54) **COMMUNICATION METHOD AND APPARATUS**

(71) Applicant: Huawei Technologies Co., Ltd., Shenzhen, Guangdong 518129 (CN)
(72) Inventor: TIE, Xiaolei, Shenzhen, Guangdong 518129 (CN); ZHANG, Zhanzhan, Shenzhen, Guangdong 518129 (CN); ZHENG, Juan, Shenzhen, Guangdong 518129 (CN); ZHOU, Han, Shenzhen, Guangdong 518129 (CN)
(74) Representative: Grünecker Patent- und Rechtsanwälte PartG mbB
(86) International application number: PCT/CN2020/121317
(87) International publication number: WO 2022/077394

(57) **Abstract**

This application provides a communication method and apparatus. The method is applicable to a scenario in which a network device configures a plurality of bandwidth parts for a terminal device. When the network device configures a first bandwidth part and a second bandwidth part for the terminal device, for the first bandwidth part, the network device may indicate distinguishing characteristic parameter information of the first bandwidth part by using first information, and the terminal device may determine characteristic parameter information of the first bandwidth part based on the first information and characteristic parameter information of the second bandwidth part. According to the method, the terminal device may store only the distinguishing characteristic parameter information of the first bandwidth part, to reduce overheads of storing the characteristic parameter information of the first bandwidth part. In addition, the network device can also reduce signaling overheads for indicating the first bandwidth part.

## Description

### TECHNICAL FIELD

This application relates to the field of wireless communication technologies, and in particular, to a communication method and apparatus.

### BACKGROUND

A concept of bandwidth part (bandwidth part, BWP) is introduced in a new radio (new radio, NR) system. One BWP is a segment of contiguous frequency resources on one carrier. One or more BWPs may be configured for one terminal device in one serving cell (serving cell), but only one uplink activated BWP and one downlink activated BWP can be applied at a time. When a plurality of BWPs are configured for the terminal device in one serving cell, the terminal device may be switched between the plurality of BWPs.

When configuring the BWP for the terminal device, a network device needs to configure a large quantity of different configuration parameters, to configure attributes of different physical channels in the BWP. For example, a configuration of a downlink BWP is used as an example. One downlink BWP needs to be configured with parameters of channels such as a physical downlink shared channel (physical downlink shared channel, PDSCH) and a physical downlink control channel (physical downlink control channel, PDCCH).

Each BWP corresponds to a large quantity of configuration parameters. Therefore, to store configuration parameters of the plurality of BWPs, the terminal device consumes large storage overheads. In addition, during BWP switching, the terminal device needs to reload a configuration parameter of a switched BWP. As a result, a switching delay is greatly increased, and a data throughput of the terminal device is affected.

### SUMMARY

An objective of this application is to provide a communication method and apparatus, to reduce storage overheads of a terminal device and improve communication efficiency.

According to a first aspect, this application provides a communication method. The method is applicable to a scenario in which a network device configures a plurality of bandwidth parts for a terminal device. The method is performed by the terminal device or a module in the terminal device. Herein, an example in which the terminal device is an execution body is used for description. The method includes: receiving first information from a network device, where the first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part; and determining the characteristic parameter information of the first bandwidth part based on the first information and the characteristic parameter information of the second bandwidth part.

According to the method described in the first aspect, the terminal device may store only the distinguishing characteristic parameter information of the first bandwidth part, to reduce overheads of storing the characteristic parameter information of the first bandwidth part, thereby improving communication efficiency. In addition, the network device can also reduce signaling overheads for indicating the first bandwidth part.

In a possible implementation of the first aspect, the characteristic parameter information of the first bandwidth part and the characteristic parameter information of the second bandwidth part have at least one same item.

According to this method, it can be ensured that storage space required for the distinguishing characteristic parameter information of the first bandwidth part is less than storage space required for the characteristic parameter information of the first bandwidth part.

In a possible implementation of the first aspect, the distinguishing characteristic parameter information includes one or more of the following: a maximum quantity of multiple-input multiple-output MIMO layers of the first bandwidth part; a slot scheduling type of the first bandwidth part; a minimum scheduling offset of a physical downlink shared channel PDSCH of the first bandwidth part; a minimum scheduling offset of a physical uplink shared channel PUSCH of the first bandwidth part; a bandwidth of the first bandwidth part; a center frequency of the first bandwidth part; and a search space set of the first bandwidth part.

In a possible implementation of the first aspect, the first information further includes an identifier of the second bandwidth part.

According to this method, the terminal device can accurately determine the second bandwidth part based on the first information.

In a possible implementation of the first aspect, the second bandwidth part is an initial bandwidth part of the terminal device; or the second bandwidth part is any bandwidth part configured by the network device for the terminal device.

In a possible implementation of the first aspect, the method further includes: receiving second information from the network device, where the second information indicates characteristic parameter information of a third bandwidth part, and a switching delay of switching from the first bandwidth part to the second bandwidth part is less than a switching delay of switching from the first bandwidth part to the third bandwidth part.

According to this method, the terminal device switches between the first bandwidth part and the second bandwidth part, so that a switching delay can be reduced, and communication efficiency can be improved.

In a possible implementation of the first aspect, the method further includes: receiving N groups of candidate configuration information from the network device, where N is a positive integer, and one of the N groups of candidate configuration information indicates partial characteristic parameter information of the first bandwidth part.

In a possible implementation of the first aspect, the N groups of candidate configuration information are configuration information of L characteristic parameters of the first bandwidth part, and L is a positive integer.

In a possible implementation of the first aspect, a characteristic parameter corresponding to the distinguishing characteristic parameter information is a radio frequency-related parameter in characteristic parameters corresponding to the first bandwidth part. Characteristic parameters corresponding to L pieces of characteristic parameter information indicated by the N groups of candidate configuration information each are a baseband-related parameter in the characteristic parameters corresponding to the first bandwidth part.

According to this method, when the terminal device is switched between the N groups of candidate configuration information, the terminal device only needs to adjust a baseband or adjust a radio frequency device, so that a switching delay can be reduced. If the radio frequency device is not adjusted, data transmission interruption may not be caused, and communication stability is improved.

In a possible implementation of the first aspect, the distinguishing characteristic parameter information indicated by the first information includes one or more of the following: the maximum quantity of multiple-input multiple-output MIMO layers of the first bandwidth part; the bandwidth of the first bandwidth part; and the center frequency of the first bandwidth part; and the one of the N groups of candidate configuration information includes one or more of the following: the slot scheduling type of the first bandwidth part, the minimum scheduling offset of the physical downlink shared channel PDSCH of the first bandwidth part, the minimum scheduling offset of the physical uplink shared channel PUSCH of the first bandwidth part; and the search space set of the first bandwidth part.

According to a second aspect, this application further provides a communication apparatus. The communication apparatus has a function of implementing any method provided in the first aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus to perform a corresponding function of the terminal device in the foregoing method. The communication apparatus may further include a memory. The memory may be coupled to the processor, and the memory stores program instructions and data that are necessary for the communication apparatus. Optionally, the communication apparatus further includes a communication interface, and the communication interface is configured to support communication between the communication apparatus and a device such as a network device.

In a possible implementation, the communication apparatus includes corresponding function modules, configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to the descriptions in the method according to the first aspect. Details are not described herein again.

According to a third aspect, this application provides a communication method. The method is applicable to a scenario in which a network device configures a plurality of bandwidth parts for a terminal device. The method is performed by the network device or a module in the network device. Herein, an example in which the network device is an execution body is used for description. The method includes: determining first information, where the first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part; and sending the first information to the terminal device.

According to the method described in the third aspect, the terminal device may store only the distinguishing characteristic parameter information of the first bandwidth part, to reduce overheads of storing the characteristic parameter information of the first bandwidth part, thereby improving communication efficiency. In addition, the network device can also reduce signaling overheads for indicating the first bandwidth part.

In a possible implementation of the third aspect, the characteristic parameter information of the first bandwidth part and the characteristic parameter information of the second bandwidth part have at least one same item.

In a possible implementation of the third aspect, the distinguishing characteristic parameter information includes one or more of the following: a maximum quantity of multiple-input multiple-output MIMO layers of the first bandwidth part; a slot scheduling type of the first bandwidth part; a minimum scheduling offset of a physical downlink shared channel PDSCH of the first bandwidth part; a minimum scheduling offset of a physical uplink shared channel PUSCH of the first bandwidth part; a bandwidth of the first bandwidth part; a center frequency of the first bandwidth part; and a search space set of the first bandwidth part.

In a possible implementation of the third aspect, the first information further includes an identifier of the second bandwidth part.

In a possible implementation of the third aspect, the second bandwidth part is an initial bandwidth part of the terminal device; or the second bandwidth part is any bandwidth part configured by the network device for the terminal device.

In a possible implementation of the third aspect, the method further includes: receiving second information from the network device, where the second information indicates characteristic parameter information of a third bandwidth part, and a switching delay of switching from the first bandwidth part to the second bandwidth part is less than a switching delay of switching from the first bandwidth part to the third bandwidth part.

In a possible implementation of the third aspect, the method further includes: sending N groups of candidate configuration information to the terminal device, where N is a positive integer, and one of the N groups of candidate configuration information indicates partial characteristic parameter information of the first bandwidth part.

In a possible implementation of the third aspect, the N groups of candidate configuration information are configuration information of L characteristic parameters of the first bandwidth part, and L is a positive integer.

In a possible implementation of the third aspect, a characteristic parameter corresponding to the distinguishing characteristic parameter information is a radio frequency-related parameter in characteristic parameters corresponding to the first bandwidth part. Characteristic parameters corresponding to L pieces of characteristic parameter information indicated by the N groups of candidate configuration information each are a baseband-related parameter in the characteristic parameters corresponding to the first bandwidth part.

According to a fourth aspect, this application further provides a communication apparatus. The communication apparatus has a function of implementing any method provided in the third aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus to perform a corresponding function of the network device in the foregoing method. The communication apparatus may further include a memory. The memory may be coupled to the processor, and the memory stores program instructions and data that are necessary for the communication apparatus. Optionally, the communication apparatus further includes a communication interface, and the communication interface is configured to support communication between the communication apparatus and a device such as a terminal device.

In a possible implementation, the communication apparatus includes corresponding function modules, configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to the descriptions in the method according to the third aspect. Details are not described herein again.

According to a fifth aspect, this application further provides a communication method. The method is applicable to a scenario in which a network device configures a plurality of bandwidth parts for a terminal device. The method is performed by the network device or a module in the network device. Herein, an example in which the network device is an execution body is used for description. The method includes: determining N groups of candidate configuration information, where N is an integer greater than 0, and one of the N groups of candidate configuration information indicates partial characteristic parameter information in the characteristic parameter information of the first bandwidth part; and sending the N groups of candidate configuration information to the terminal device.

According to the method described in the fifth aspect, the network device may configure only the N groups of candidate configuration information, to configure N bandwidth parts, thereby reducing storage overheads of the terminal device, and improving communication efficiency.

In a possible implementation of the fifth aspect, the N groups of candidate configuration information are configuration information of L characteristic parameters of the first bandwidth part, and L is an integer greater than 0.

In a possible implementation of the fifth aspect, the one of the N groups of candidate configuration information includes one or more of the following: a maximum quantity of multiple-input multiple-output MIMO layers of the first bandwidth part; a slot scheduling type of the first bandwidth part; a minimum scheduling offset of a physical downlink shared channel PDSCH of the first bandwidth part; a minimum scheduling offset of a physical uplink shared channel PUSCH of the first bandwidth part; a bandwidth of the first bandwidth part; a center frequency of the first bandwidth part; and a search space set of the first bandwidth part.

In a possible implementation of the fifth aspect, the method further includes: sending third information to the terminal device, where the third information indicates information other than the partial characteristic parameter information in the characteristic parameter information of the first bandwidth part.

In a possible implementation of the fifth aspect, the method further includes: sending a control instruction to the terminal device, where the control instruction instructs to determine effective configuration information based on a first of the N groups of candidate configuration information.

According to a sixth aspect, this application further provides a communication apparatus. The communication apparatus has a function of implementing any method provided in the fifth aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus to perform a corresponding function of the network device in the foregoing method. The communication apparatus may further include a memory. The memory may be coupled to the processor, and the memory stores program instructions and data that are necessary for the communication apparatus. Optionally, the communication apparatus further includes a communication interface, and the communication interface is configured to support communication between the communication apparatus and a device such as a terminal device.

In a possible implementation, the communication apparatus includes corresponding function modules, configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to the descriptions in the method according to the fifth aspect. Details are not described herein again.

According to a seventh aspect, a communication method is provided. The method is applicable to a scenario in which a network device configures a plurality of bandwidth parts for a terminal device. The method is performed by the terminal device or a module in the terminal device. Herein, an example in which the terminal device is an execution body is used for description. The method includes: receiving N groups of candidate configuration information from the network device, where N is an integer greater than 0, and one of the N groups of candidate configuration information indicates partial characteristic parameter information in the characteristic parameter information of the first bandwidth part; and determining effective configuration information based on the one of the N groups of candidate configuration information.

According to the method described in the fifth aspect, the network device may configure only the N groups of candidate configuration information, to configure N bandwidth parts, thereby reducing storage overheads of the terminal device, and improving communication efficiency.

In a possible implementation of the seventh aspect, the N groups of candidate configuration information are configuration information of L characteristic parameters of the first bandwidth part, and L is an integer greater than 0.

In a possible implementation of the seventh aspect, the one of the N groups of candidate configuration information includes one or more of the following: a maximum quantity of multiple-input multiple-output MIMO layers of the first bandwidth part; a slot scheduling type of the first bandwidth part; a minimum scheduling offset of a physical downlink shared channel PDSCH of the first bandwidth part; a minimum scheduling offset of a physical uplink shared channel PUSCH of the first bandwidth part; a bandwidth of the first bandwidth part; a center frequency of the first bandwidth part; and a search space set of the first bandwidth part.

In a possible implementation of the seventh aspect, the method further includes: receiving a control instruction from the network device, where the control instruction instructs to determine the effective configuration information based on a first of the N groups of candidate configuration information.

According to this method, the terminal device is instructed to select the effective configuration information from the N groups of candidate configuration information, so that the terminal device can be prevented from switching between different bandwidth parts, a switching delay is reduced, and communication efficiency is improved.

According to an eighth aspect, this application further provides a communication apparatus. The communication apparatus has a function of implementing any method provided in the seventh aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus to perform a corresponding function of the terminal device in the foregoing method. The communication apparatus may further include a memory. The memory may be coupled to the processor, and the memory stores program instructions and data that are necessary for the communication apparatus. Optionally, the communication apparatus further includes a communication interface, and the communication interface is configured to support communication between the communication apparatus and a device such as a network device.

In a possible implementation, the communication apparatus includes corresponding function modules, configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to the descriptions in the method according to the seventh aspect. Details are not described herein again.

According to a ninth aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the first aspect or the possible implementations of the first aspect through a logic circuit or executing code instructions.

According to a tenth aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the function module of the method according to any one of the third aspect or the possible implementations of the third aspect through a logic circuit or executing code instructions.

According to an eleventh aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the function module of the method according to any one of the fifth aspect or the possible implementations of the fifth aspect through a logic circuit or executing code instructions.

According to a twelfth aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the function module of the method according to any one of the seventh aspect or the possible implementations of the seventh aspect through a logic circuit or executing code instructions.

According to a thirteenth aspect, a computer-readable storage medium is provided, where the computer-readable storage medium stores a computer program or instructions, and when the computer program or the instructions is/are executed by a processor, the method in any one of the first aspect, the third aspect, the fifth aspect, the seventh aspect, or the possible implementations of any one of the foregoing aspects is implemented.

According to a fourteenth aspect, a computer program product including instructions is provided. When the instructions are run by a processor, the method in any one of the first aspect, the third aspect, the fifth aspect, the seventh aspect, or the possible implementations of any one of the foregoing aspects is implemented.

According to a fifteenth aspect, a chip system is provided. The chip system includes a processor, and may further include a memory, configured to implement the method in any one of the first aspect, the third aspect, the fifth aspect, the seventh aspect, or the possible implementations of any one of the foregoing aspects. The chip system may include a chip, or may include a chip and another discrete component.

According to a sixteenth aspect, a communication system is provided. The system includes the apparatus (for example, the terminal device) according to the second aspect and the apparatus (for example, the network device) according to the fourth aspect.

According to a seventeenth aspect, a communication system is provided. The system includes the apparatus (for example, the network device) according to the sixth aspect and the apparatus (for example, the terminal device) according to the eighth aspect.

### BRIEF DESCRIPTION OF DRAWINGS

FIG. 1 is a schematic diagram of an architecture of a network to which an embodiment of this application is applicable;
FIG. 2 is a schematic diagram of a switching delay in a conventional technology;
FIG. 3 is a schematic flowchart of a communication method according to an embodiment of this application;
FIG. 4 is a schematic diagram of storage of characteristic parameter information according to an embodiment of this application;
FIG. 5 is a schematic diagram of a switching delay according to an embodiment of this application;
FIG. 6 is a schematic flowchart of a communication method according to an embodiment of this application;
FIG. 7 is a schematic diagram of storage of candidate configuration information according to an embodiment of this application;
FIG. 8 is a schematic diagram of a structure of a communication apparatus according to an embodiment of this application; and
FIG. 9 is a schematic diagram of a structure of a communication apparatus according to an embodiment of this application.

### DESCRIPTION OF EMBODIMENTS

The following further describes in detail embodiments of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, and an NR system. This is not limited herein.

A terminal device in embodiments of this application may be a device having a wireless transceiver function or a chip that can be disposed in any device, or may also be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

A network device may be a next generation base station (next Generation NodeB, gNB) in an NR system, may be an evolved base station (evolved NodeB, eNB) in an LTE system, may be a base transceiver station (base transceiver station, BTS) in a global system for mobile communications (global system for mobile communications, GSM) system or a code division multiple access (code division multiple access, CDMA) system, may be a base station (NodeB, NB) in a wideband code division multiple access (wideband code division multiple access, WCDMA) system, or the like.

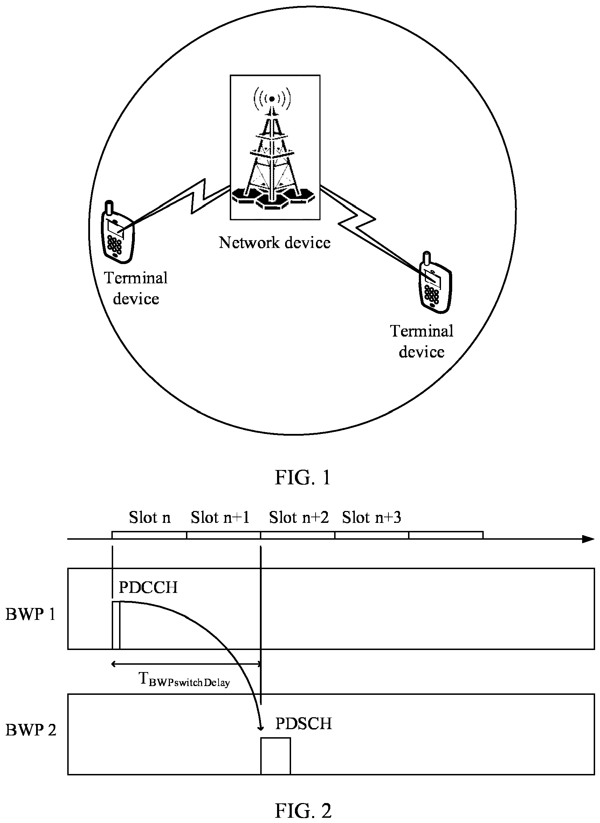

FIG. 1 is a schematic diagram of a network architecture to which an embodiment of this application is applicable. As shown in FIG. 1, a terminal device may access a network device, to access a service of an external network (for example, a data network (data network, DN)) through the network device, or communicate with another device through the network device, for example, communicate with another terminal device.

An NR system is used as an example. In FIG. 1, the terminal device may send an uplink signal or receive a downlink signal by using a BWP configured by the network device for the terminal device. In the NR system, to enable the terminal device to receive and send data on different BWPs at different moments based on service requirements, the NR system supports BWP switching performed by the terminal device. Currently, there are three methods for implementing BWP switching:
- Downlink control information (downlink control information, DCI) indication: The network device sends DCI to indicate the terminal device to perform BWP switching.
- Timer-based method: A network configures a BWP-inactivity timer (bwp-InactivityTimer). If the bwp-InactivityTimer of the terminal device expires in a current BWP, the terminal device may switch to a default BWP (default BWP).
- Radio resource control (radio resource control, RRC) signaling indication: The network device sends RRC signaling to indicate the terminal device to perform BWP switching.

For BWP switching indicated by the DCI, if a slot (slot) in which the DCI indicating BWP switching is located is n, the terminal device needs to be capable of receiving a physical downlink shared channel (physical downlink shared channel, PDSCH) or sending a physical uplink shared channel (physical uplink shared channel, PUSCH) on a switched BWP after a start moment of a slot n+T_{BWPswitchDelay.}

Based on different capabilities of the terminal device, two different types (type) of BWP switching delays are defined in the NR system, and are specifically shown in Table 1.

**Table 1**

| µ | NR slot length (ms) | BWP switching delay T_{BWPswitchDelay} (slot) | |
|---|---|---|---|
| | | Type 1 | Type 2 |
| 0 | 1 | 1 | 3 |
| 1 | 0.5 | 2 | 5 |
| 2 | 0.25 | 3 | 9 |
| 3 | 0.125 | 6 | 17 |

µ is a parameter corresponding to a subcarrier spacing at which the terminal device operates, to be specific, the subcarrier spacing at which the terminal device operates is 2*^{µ}*·15 kHz. The terminal device may report, to the network device, whether a BWP switching capability supported by the terminal device is the type 1 or the type 2.

In a BWP switching process, the terminal device needs to reload configuration parameter information of the switched BWP, and adjust a radio frequency channel based on a configuration parameter of the switched BWP. Therefore, within the BWP switching delay T_{BWPswitchDelay}, the terminal device is not required to send an uplink signal or receive a downlink signal. For example, as shown in FIG. 2, a currently active BWP is a BWP 1, the network device transmits DCI through a PDCCH, to indicate the terminal device to switch from the BWP 1 to a BWP 2, and the DCI schedules a PDSCH. In FIG. 2, the BWP switching delay T_{BWPswitchDelay} is two slots. The terminal device needs to ensure that BWP switching is completed within the BWP switching delay, to be specific, the terminal device can receive the PDSCH on the BWP 2 after a start moment of a slot n+2. Correspondingly, the network device should schedule data of the terminal device after a start moment of a slot n+T_{BWPswitchDelay.} For ease of description, the BWP switching delay is briefly referred to as a switching delay below.

It can be learned from the foregoing description that when the network device configures a plurality of BWPs for the terminal device, because a configuration parameter of each BWP requires large storage, for example, currently one BWP requires at least 40 K bytes, overheads of storing configuration parameters of the plurality of BWPs by the terminal device increase, especially for a reduced-capability (reduced-capability, REDCAP) terminal device having small storage space. Therefore, the existing BWP configuration method is not applicable to an objective that the REDCAP terminal device needs to reduce storage overheads, to reduce power consumption and costs.

In addition, when the terminal device performs BWP switching between the plurality of BWPs, the terminal device needs to reload a configuration parameter of a switched BWP, and a switching delay is greatly increased. However, during BWP switching, the terminal device cannot transmit data, and a throughput is affected.

In view of this, this application provides a method, to reduce storage overheads required for storing the configuration parameters of the plurality of BWPs as much as possible, reduce the BWP switching delay as much as possible, and reduce scheduling impact caused by BWP switching.

The network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and emergence of new service scenarios, the technical solutions provided in embodiments of this application are also applicable to similar technical problems.

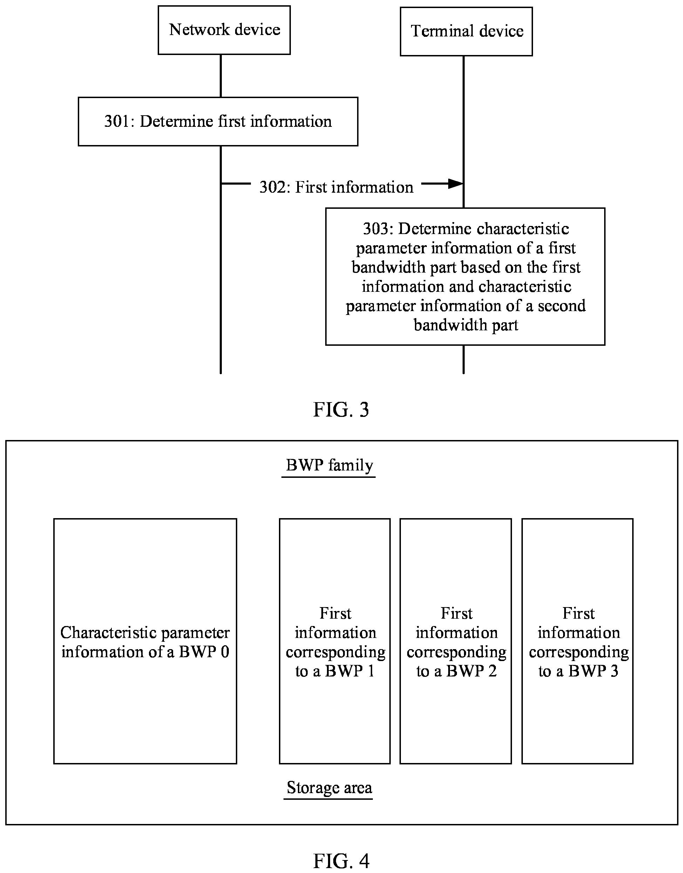

With reference to the foregoing descriptions, FIG. 3 is a schematic flowchart of a communication method according to an embodiment of this application. In FIG. 3, interaction between a network device and a terminal device is used as an example for description. An operation performed by the network device may alternatively be performed by a chip or a module in the network device, and an operation performed by the terminal device may also be performed by a chip or a module in the terminal device. Refer to FIG. 3. The method includes the following steps.

S301: The network device determines first information.

The first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part.

For ease of description, definitions of several terms are described herein first.

Characteristic parameter: describes a characteristic or an attribute of a bandwidth part. One bandwidth part includes a plurality of characteristic parameters, for example, a bandwidth, a center frequency, a search space set (search space set), a PDSCH, a PDCCH, a PUSCH, a maximum quantity of multiple-input multiple-output (multiple-input multiple-output, MIMO) layers, a slot scheduling type, a minimum scheduling offset K0 of the PDSCH, and a minimum scheduling offset K2 of the PUSCH that are of the bandwidth part.

Parameter information: Configuration information of each characteristic parameter of the bandwidth part may be referred to as the parameter information. For example, the characteristic parameter is a maximum quantity of MIMO layers, and the network device may configure a maximum quantity of MIMO layers of the first bandwidth part to 2, 4, or the like. In this case, 2 or 4 is parameter information corresponding to the maximum quantity of MIMO layers. For another example, for the characteristic parameter of a slot scheduling type, the network device may configure the characteristic parameter as cross-slot scheduling or same-slot scheduling. The cross-slot scheduling or the same-slot scheduling is parameter information corresponding to the slot scheduling type.

Characteristic parameter information: is a set of parameter information corresponding to all characteristic parameters included in a bandwidth part. It is assumed that the bandwidth part includes 10 characteristic parameters, and parameter information corresponding to the 10 characteristic parameters may be collectively referred to as the characteristic parameter information.

The distinguishing characteristic parameter information of the first bandwidth part may be information that is in the characteristic parameter information of the first bandwidth part and that is different from the characteristic parameter information of the second bandwidth part. For example, the characteristic parameter information of the first bandwidth part includes: a maximum quantity of MIMO layers is 2; a slot scheduling type is cross-slot scheduling; and a bandwidth is 100 MHz. The characteristic parameter information of the first bandwidth part includes: a maximum quantity of MIMO layers is 1; a slot scheduling type is cross-slot scheduling; and a bandwidth is 20 MHz. In this case, the distinguishing characteristic parameter information of the first bandwidth part may include: the maximum quantity of MIMO layers is 2; and the bandwidth is 100 MHz. In this case, when configuring the first bandwidth part, the network device may not configure the slot scheduling type of the first bandwidth part, but only configure the maximum quantity of MIMO layers and the bandwidth.

The foregoing is merely an example, and the distinguishing characteristic parameter information may further include one or more of the following:
a maximum quantity of MIMO layers of the first bandwidth part; a slot scheduling type of the first bandwidth part including cross-slot scheduling and same-slot scheduling, where the cross-slot scheduling means that a PDCCH and a PDSCH are scheduled in different slots, and the same-slot scheduling means that a PDCCH and a PDSCH are scheduled in a same slot; a minimum scheduling offset K0 of a PDSCH of the first bandwidth part that may indicate a slot interval between downlink scheduling DCI and a PDSCH scheduled by the downlink scheduling DCI; a minimum scheduling offset K2 of a PUSCH of the first bandwidth part that may indicate a slot interval between uplink scheduling DCI and a PUSCH scheduled by the uplink scheduling DCI, a bandwidth of the first bandwidth part, a center frequency of the first bandwidth part, and a search space set of the first bandwidth part.

The foregoing are merely examples for description, and information specifically included in the distinguishing characteristic parameter information may be determined according to an actual situation, and is not enumerated herein.

The first information may further indicate an identifier of the second bandwidth part, so that the second bandwidth part is indicated by using the identifier of the second bandwidth part. In this embodiment of this application, the second bandwidth part may be a preset bandwidth part, or may be a bandwidth part indicated by the network device by using signaling. When the second bandwidth part is the preset bandwidth part, the second bandwidth part may be an initial bandwidth part of the terminal device, or may be any bandwidth part configured by the network device for the terminal device.

For example, the network device may configure a plurality of bandwidth parts for the terminal device. For example, in the NR system, the network device may configure four bandwidth parts for the terminal device, and may use one of the plurality of bandwidth parts configured for the terminal device as the second bandwidth part.

It should be noted that, the first bandwidth part may be an uplink bandwidth part or a downlink bandwidth part, and the second bandwidth part may be an uplink bandwidth part or a downlink bandwidth part. This is not limited in this application. The characteristic parameter information of the first bandwidth part and the characteristic parameter information of the second bandwidth part have at least one same item. The distinguishing characteristic parameter information indicated by the first information can reduce storage overheads of the first bandwidth part.

S302: The network device sends the first information to the terminal device, and correspondingly, the terminal device receives the first information from the network device.

The network device may send the first information by using DCI, or may send the first information by using higher layer signaling such as RRC signaling. This is not limited in this embodiment of this application.

S303: The terminal device determines the characteristic parameter information of the first bandwidth part based on the first information and the characteristic parameter information of the second bandwidth part.

It should be noted that when the terminal device needs to operate in the first bandwidth part, the terminal device may update the characteristic parameter information of the second bandwidth part based on the distinguishing characteristic parameter information, to obtain the characteristic parameter information of the first bandwidth part. Specifically, it is assumed that the distinguishing characteristic parameter information includes a maximum quantity of MIMO layers, a slot scheduling type, and a bandwidth. The terminal device may update a maximum quantity of MIMO layers of the second bandwidth part to the maximum quantity of MIMO layers in the distinguishing characteristic parameter information, update a slot scheduling type of the second bandwidth part to the slot scheduling type in the distinguishing characteristic parameter information, update a bandwidth of the second bandwidth part to the bandwidth in the distinguishing characteristic parameter information, and keep parameter information of another characteristic parameter unchanged, to obtain the characteristic parameter information of the first bandwidth part.

In the foregoing method, the network device needs to indicate only the distinguishing characteristic parameter information of the first bandwidth part by using the first information, and the terminal device may determine the characteristic parameter information of the first bandwidth part. The terminal device may store only the characteristic parameter information of the second bandwidth part and the distinguishing characteristic parameter information of the first bandwidth part, thereby reducing overheads for storing the characteristic parameter information of the first bandwidth part. In addition, the network device can also reduce signaling overheads for indicating the first bandwidth part.

In the foregoing procedure, the second bandwidth part may also be referred to as a reference bandwidth part, and the first bandwidth part may also be referred to as a simplified bandwidth part (simplified BWP), an inheritance bandwidth part (inheritance BWP), a cloned bandwidth part (cloned BWP), or the like. Names of the first bandwidth part and the second bandwidth part are not limited in this application. Currently, a bandwidth part needs to be configured with many pieces of characteristic parameter information. For example, characteristic parameter information such as a bandwidth, a center frequency, a search space set (search space set), a PDSCH, a PDCCH, a PUSCH, a maximum quantity of multiple-input multiple-output (multiple-input multiple-output, MIMO) layers, a slot scheduling type, a minimum scheduling offset K0 of the PDSCH, and a minimum scheduling offset K2 of the PUSCH that are of the bandwidth part needs to be configured. The foregoing is merely an example for description. The characteristic parameter information that needs to be configured for the bandwidth part is not limited to the foregoing examples, and further includes other content, which is not enumerated herein.

In the foregoing procedure, that the network device configures one first bandwidth part and one second bandwidth part is used as an example. In actual application, the network device may configure one second bandwidth part and Y first bandwidth parts. The second bandwidth part is used as a reference bandwidth part for all the Y first bandwidth parts, and Y is a positive integer.

Specifically, as described above, a plurality of characteristic parameters need to be configured for one bandwidth part. For the second bandwidth part, the network device may configure parameter information for all characteristic parameters of the second bandwidth part. However, for any one of the Y first bandwidth parts, parameter information may be configured for only some characteristic parameters of the first bandwidth part, to obtain distinguishing characteristic parameter information. Specifically, for the first bandwidth part, if parameter information of a characteristic parameter of the first bandwidth part is the same as parameter information of a corresponding characteristic parameter of the second bandwidth part, the parameter information of the characteristic parameter is not further configured; or if parameter information of a characteristic parameter of the first bandwidth part is different from parameter information of a corresponding characteristic parameter of the second bandwidth part, the parameter information of the characteristic parameter is configured. A value of Y may be determined based on a capability of the terminal device, or may be specified in a protocol. For ease of description, the second bandwidth part and the Y first bandwidth parts may be referred to as one BWP family (family). Without loss of generality, only one second bandwidth part in one BWP family is used as a reference bandwidth part. Without loss of generality, a BWP group and a BWP set may also be used to refer to a BWP family. Correspondingly, the network device may also configure X BWP families for the terminal device, where X may be determined based on the capability of the terminal device, or may be specified in the protocol.

For example, a size of characteristic parameter information of a second bandwidth part BWP 0 configured by the network device is approximately P× 10 kilobytes (kilobyte, KB). For example, P may be equal to 4, and the characteristic parameter information of the second bandwidth part BWP 0 includes at least the following content: a maximum quantity of MIMO layers of the first bandwidth part; a slot scheduling type of the first bandwidth part including cross-slot scheduling and same-slot scheduling, where the cross-slot scheduling means that a PDCCH and a PDSCH are scheduled in different slots, and the same-slot scheduling means that a PDCCH and a PDSCH are scheduled in a same slot; a minimum scheduling offset K0 of a PDSCH of the first bandwidth part that may indicate a slot interval between downlink scheduling DCI and a PDSCH scheduled by the downlink scheduling DCI; a minimum scheduling offset K2 of a PUSCH of the first bandwidth part that may indicate a slot interval between uplink scheduling DCI and a PUSCH scheduled by the uplink scheduling DCI, a bandwidth of the first bandwidth part, a center frequency of the first bandwidth part, and a search space set of the first bandwidth part. Storage space occupied by the characteristic parameter information of the second bandwidth part BWP 0 may be shown in FIG. 4. The network device further configures three first bandwidth parts: a BWP 1, a BWP 2, and a BWP 3. In the three BWPs, parameter information corresponding to most characteristic parameters in each BWP is the same as parameter information of a corresponding characteristic parameter in the second bandwidth part BWP 0. Therefore, parameter information of these characteristic parameters may not be configured. Specifically, a size of first information corresponding to a BWP 1 may be only hundreds of bits, and is far less than P×10 KB. The first information corresponding to the BWP 1 may include the following content: an identifier of the BWP 1; an identifier of the BWP 0, a maximum quantity of MIMO layers of the BWP 1; a bandwidth of the BWP 1; and a center frequency of the BWP 1.

Similarly, a size of first information corresponding to a BWP 2 is far less than P×10 KB, and a size of first information corresponding to a BWP 3 is also far less than P×10 KB. The first information corresponding to the BWP 2 may include the following content: an identifier of the BWP 2; an identifier of the BWP 0; a slot scheduling type of the BWP 2; a bandwidth of the BWP 2; and a minimum scheduling offset K0 of a PDSCH of the BWP 2. The first information corresponding to the BWP 3 may include the following content: an identifier of the BWP 3, an identifier of the BWP 0; a maximum quantity of MIMO layers of the BWP 3; a center frequency of the BWP 3; and a minimum scheduling offset K2 of a PUSCH of the BWP 3.

It can be learned from the first information corresponding to the BWP 1 that the maximum quantity of MIMO layers, the bandwidth, and the center frequency that are of the BWP 1 are different from the maximum quantity of MIMO layers, the bandwidth, and the center frequency that are of the BWP 0, and other characteristic parameter information is correspondingly the same. Other cases are not described again. When all configuration parameter information of the BWP 0 is known or can be learned of, the terminal device needs to store only distinguishing characteristic parameter information of the BWP 1 relative to the BWP 0, and does not need to store all characteristic parameter information corresponding to the BWP 1. Therefore, storage space can be reduced. Similarly, the terminal device only needs to store distinguishing characteristic parameter information of the BWP 2 relative to the BWP 0 and the first information corresponding to the BWP 3. When the network device configures a plurality of BWPs, storage overheads of the terminal device can be greatly reduced, thereby reducing power consumption and costs.

In this embodiment of this application, when the terminal device performs BWP switching between BWPs in a same BWP family, a switching delay required by the terminal device may be reduced. Specifically, when the terminal device performs BWP switching based on the indication of the DCI, the switching delay mainly includes three parts: a first part: a DCI parsing time (DCI parsing time); a second part: a time for applying new characteristic parameter (applying new parameters) information; and a third part: a radio frequency readjustment time (radio frequency retuning time), and the like. It should be noted that there are other factors affecting the switching delay. Only three factors are listed above, and other cases are not described again.

The time for applying the new characteristic parameter information may be a time required for reloading characteristic parameter information of a switched BWP. The radio frequency readjustment time is a time required for readjusting a frequency adapted to a radio frequency transmit channel of the terminal device to a frequency of a switched BWP. The time may also be referred to as a radio frequency retuning time, a radio frequency retuning delay (RF retuning delay), a radio frequency retuning gap (RF retuning gap), or the like. For ease of description, the radio frequency readjustment time is collectively referred to below.

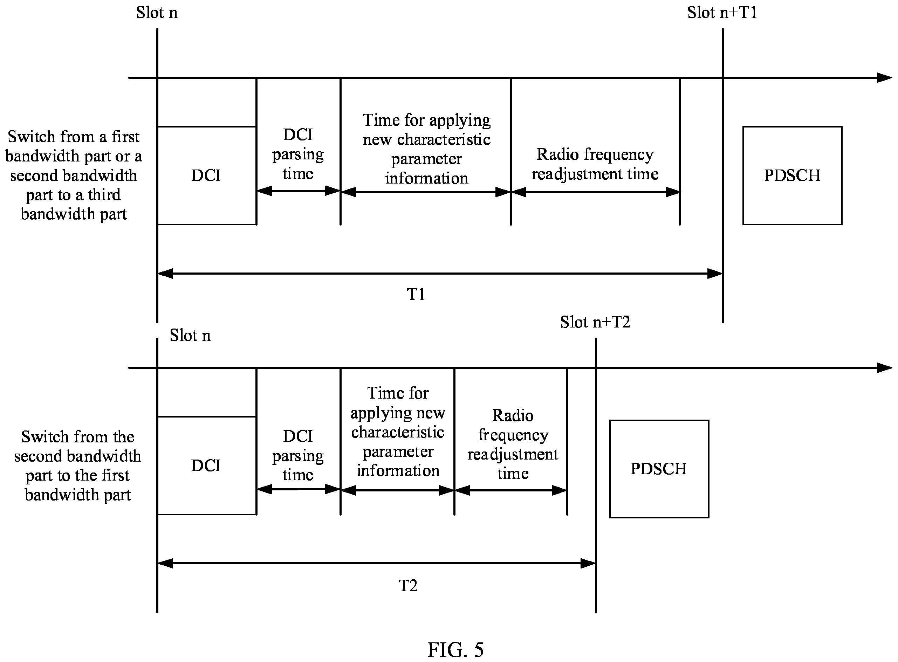

For example, it is assumed that the network device further configures a third bandwidth part for the terminal device. Specifically, the network device may send second information to the terminal device, where the second information indicates characteristic parameter information of the third bandwidth part. There is no correspondence between the third bandwidth part and the first bandwidth part or the second bandwidth part. In other words, the third bandwidth part and the first bandwidth part or the second bandwidth part do not belong to a same BWP family. As shown in FIG. 5, a switching delay T1 for switching the terminal device from the first bandwidth part or the second bandwidth part to the third bandwidth part may be stipulated in an existing standard, for example, determined by using Table 1. A switching delay T2 for switching the terminal device from the second bandwidth part to the first bandwidth part is less than the switching delay T1. Specifically, as described above, the switching delay T1 and the switching delay T2 each include three parts.

In addition, in this embodiment of this application, because there are a plurality of pieces of same characteristic parameter information between the first bandwidth part and the second bandwidth part, when the terminal device switches from the second bandwidth part to the first bandwidth part, the terminal device does not need to reload all characteristic parameter information of the first bandwidth part, but only needs to reload the distinguishing characteristic parameter information between the second bandwidth part and the first bandwidth part. It may be understood that only the first information of the first bandwidth part relative to the second bandwidth part needs to be reloaded. Therefore, a time required for the terminal device to reload the characteristic parameter information is reduced, that is, a second part of the switching delay T2 is less than a second part of the switching delay T1.

Further, for the characteristic parameter information such as the center frequency, if the center frequency of the first bandwidth part and the center frequency of the second bandwidth part is the same, the terminal device may also reduce the radio frequency readjustment time, that is, a third part of the switching delay T2 is less than a third part of the switching delay T1.

With reference to FIG. 5 and the foregoing descriptions, when the terminal device performs BWP switching between BWPs in a same BWP family, a switching delay can be reduced, and scheduling efficiency can be improved.

For example, Table 2 shows a switching delay according to an embodiment of this application.

**Table 2**

| µ | NR slot length (ms) | BWP switching delay T_{BWPswitchDelay} (slot) | | | |
|---|---|---|---|---|---|
| | | Type 1 | | Type 2 | |
| 0 | 1 | 1 | 0.5 | 3 | 2 |
| 1 | 0.5 | 2 | 1 | 5 | 3 |
| 2 | 0.25 | 3 | 2 | 9 | 7 |
| 3 | 0.125 | 6 | 3 | 17 | 13 |

In Table 2, the left column of the type 1 and the left column of the type 2 are BWP switching delays in the existing standard, and the right column of the type 1 and the right column of the type 2 are BWP switching delays newly added in this application.

When a capability reported by the terminal device is the type 1, a switching delay of switching from the first bandwidth part to the second bandwidth part or a switching delay of switching from the second bandwidth part to the first bandwidth part may be determined from the right column of the type 1. For example, when a value of µ is 1, that is, when a subcarrier spacing is 30 kHz, the switching delay is one slot. A switching delay of switching the terminal device from the first bandwidth part or the second bandwidth part to the third bandwidth part, or a switching delay of switching the terminal device from the third bandwidth part to the first bandwidth part or the second bandwidth part may be determined from the left column of the type 1. For example, when a value of µ is 1, that is, when a subcarrier spacing is 30 kHz, the switching delay is two slots.

Correspondingly, when a capability reported by the terminal device is the type 2, a switching delay of switching from the first bandwidth part to the second bandwidth part or a switching delay of switching from the second bandwidth part to the first bandwidth part may be determined from the right column of the type 2. A switching delay of switching the terminal device from the first bandwidth part or the second bandwidth part to the third bandwidth part, or a switching delay of switching the terminal device from the third bandwidth part to the first bandwidth part or the second bandwidth part may be determined from the left column of the type 2.

It should be noted that Table 2 is merely an example, and there may be another case in Table 2. Examples are not described one by one herein.

In this embodiment of this application, characteristic parameters of a bandwidth part may be further divided into two parts. One piece of parameter information is configured for each characteristic parameter in some of the characteristic parameters. A plurality of pieces of parameter information may be configured for each characteristic parameter in the other of the characteristic parameters. These characteristic parameters each may be considered as a variable parameter set (adaptation parameters set), and the variable parameter set includes one or more characteristic parameters. In other words, a plurality of groups of candidate configuration information may be configured for the variable parameter set, and one group of candidate configuration information indicates parameter information corresponding to the variable parameter set. The network device may no longer indicate a BWP to which the terminal device is switched, but indicate the terminal device not to perform BWP switching and use a group of candidate configuration information as characteristic parameters of a current BWP. Details are described below.

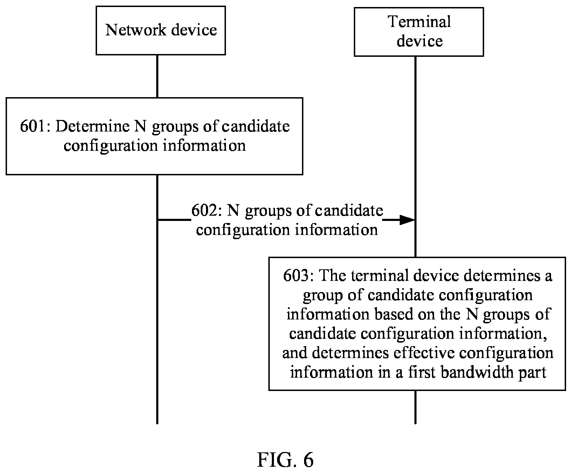

FIG. 6 is a schematic flowchart of a communication method according to an embodiment of this application. In FIG. 6, interaction between a network device and a terminal device is used as an example for description. An operation performed by the network device may alternatively be performed by a chip or a module in the network device, and an operation performed by the terminal device may also be performed by a chip or a module in the terminal device. Refer to FIG. 6. The method includes the following steps.

S601: The network device determines N groups of candidate configuration information.

One of the N groups of candidate configuration information indicates partial characteristic parameter information in characteristic parameter information of a first bandwidth part. In this embodiment of this application, N is an integer greater than 0, and a value of N may be determined by the network device, or may be determined by a capability reported by the terminal device, or may be predefined in a protocol.

One of the N groups of candidate configuration information may correspond to L characteristic parameters, and L is a positive integer.

In this embodiment of this application, the N groups of candidate configuration information may correspond to same L characteristic parameters. The L characteristic parameters corresponding to the N groups of candidate configuration information may be characteristic parameters preset in a protocol, characteristic parameters reported by the terminal device, or characteristic parameters configured by a network. This is not limited in this application.

For example, the L characteristic parameters corresponding to the N groups of candidate configuration information may include one or more of the following:
a maximum quantity of MIMO layers of the first bandwidth part; a slot scheduling type of the first bandwidth part; a minimum scheduling offset of a PDSCH of the first bandwidth part; a minimum scheduling offset of a PUSCH of the first bandwidth part; a bandwidth of the first bandwidth part; a center frequency of the first bandwidth part; and a search space set of the first bandwidth part.

With reference to the foregoing example, assuming that N is equal to 2, two groups of candidate configuration information may be separately shown as follows:
The first group of candidate configuration information may include the following content: a maximum quantity of downlink MIMO layers is 2; a slot scheduling type is cross-slot scheduling (a minimum scheduling offset of a PDSCH is two slots); a bandwidth is B1, where B1 is a number greater than 0; a center frequency is F1; and a search space set is a set 1. In this example, L=5.

The second group of candidate configuration information may include the following content: a maximum quantity of downlink MIMO layers is 4; a slot scheduling type is same-slot scheduling (a minimum scheduling offset of a PDSCH is 0); a bandwidth is B2, where B2 is a number greater than 0; a center frequency is F2; and a search space set is a set 2. In this example, L=5.

It should be noted that the N groups of candidate configuration information may further correspond to different groups of characteristic parameters. Examples are not described herein one by one.

S602: The network device sends the N groups of candidate configuration information to the terminal device, and correspondingly, the terminal device receives the N groups of candidate configuration information from the network device.

The network device may further send third information to the terminal device, where the third information indicates the characteristic parameter information of the first bandwidth part. The third information may indicate characteristic parameter information of all characteristic parameters of the first bandwidth part, or may indicate information about a characteristic parameter other than the L characteristic parameters.

Correspondingly, the terminal device may further receive the third information, and determine N groups of complete BWP configuration information by combining the third information with the N groups of candidate configuration information. Although the network device configures one first bandwidth part for the terminal device, the third information and one of the N groups of candidate configuration information may be used as the characteristic parameter information of all the characteristic parameters of the first bandwidth part. Therefore, it is equivalent to that the network device configures N first bandwidth parts for the terminal device. In other words, the terminal device needs only very little storage space, and may store characteristic parameter information corresponding to a plurality of bandwidth parts, thereby reducing storage overheads of the terminal device.

S603: The terminal device determines one group of candidate configuration information based on the N groups of candidate configuration information, and determines effective configuration information in the first bandwidth part.

The effective configuration information refers to configuration information applied when the first bandwidth part is used to transmit data. In other words, the terminal device uses one of the N groups of candidate configuration information for communication. The effective configuration information may also be referred to as activated configuration information.

The terminal device may determine updated characteristic parameter information of the first bandwidth part based on the effective configuration information, to perform communication in the first bandwidth part based on the characteristic parameter information of the first bandwidth part. Specifically, the terminal device may update, based on the effective configuration information, parameter information of a characteristic parameter corresponding to the effective configuration information in current characteristic parameter information of the first bandwidth part, to obtain updated characteristic parameter information of the first bandwidth part.

For example, it is assumed that the effective configuration information includes a maximum quantity of MIMO layers, a slot scheduling type, and a bandwidth. The terminal device may separately update a maximum quantity of MIMO layers, a slot scheduling type, and a bandwidth in the current characteristic parameter information of the first bandwidth part to the maximum MIMO layer quantity, the slot scheduling type, and the bandwidth in the effective configuration information, and keep parameter information of another characteristic parameter unchanged, to obtain the updated characteristic parameter information of the first bandwidth part.

In this embodiment of this application, the terminal device may receive a control instruction from the network device, where the control instruction instructs to determine the effective configuration information based on a first of the N groups of candidate configuration information. A specific implementation and a name of the control instruction are not limited in this embodiment of this application.

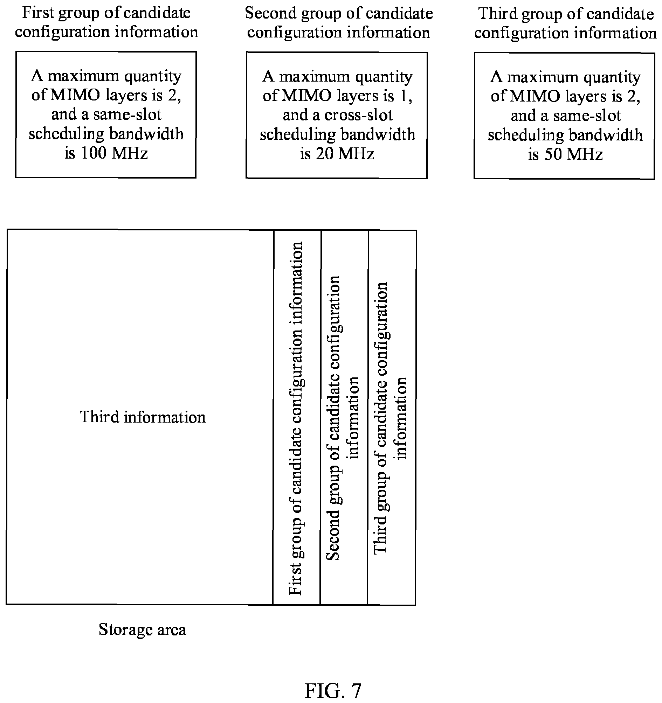

For example, as shown in FIG. 7, it is assumed that N is equal to 3, and a group of characteristic parameters corresponding to the N groups of candidate configuration information includes the following content: a maximum quantity of MIMO layers of the first bandwidth part; a slot scheduling type of the first bandwidth part; and a bandwidth of the first bandwidth part.

The first group of candidate configuration information includes the following content: a maximum quantity of MIMO layers is 2; a slot scheduling type is same-slot scheduling; and a bandwidth is 100 MHz.

The second group of candidate configuration information includes the following content: a maximum quantity of MIMO layers is 1; a slot scheduling type is cross-slot scheduling; and a bandwidth is 20 MHz.

The third group of candidate configuration information includes the following content: a maximum quantity of MIMO layers is 2; a slot scheduling type is same-slot scheduling; and a bandwidth is 50 MHz.

It is assumed that the third information is characteristic parameter information of a characteristic parameter other than the maximum quantity of MIMO layers, the slot scheduling type, and the bandwidth in the first bandwidth part. The terminal device currently uses the first group of candidate configuration information as the effective configuration information to perform data transmission. When a switching instruction received by the terminal device instructs the terminal device to switch to the second group of candidate configuration information, the terminal device may update the maximum quantity of MIMO layers of the first bandwidth part to 1, update the slot scheduling type of the first bandwidth part to cross-slot scheduling, update the bandwidth of the first bandwidth part to 20 MHz, and keep a configuration of another characteristic parameter unchanged.

In this implementation, when the terminal device performs switching in the N groups of candidate configuration information, a switching delay may also be less than a conventional switching delay, that is, less than the switching delay specified in Table 1. For details, refer to the foregoing descriptions. Details are not described herein again. According to this method, the terminal device can switch to another bandwidth part only by updating a few characteristic parameters, thereby improving switching efficiency and reducing a switching delay.

Embodiments described in this specification may be independent solutions, or may be combined according to internal logic. For example, in the procedure shown in FIG. 3, when configuring the first bandwidth part for the terminal device, the network device may further configure the N groups of candidate configuration information for the first bandwidth part in addition to configuring the first information.

In this case, a characteristic parameter corresponding to the distinguishing characteristic parameter information indicated by the first information may be a radio frequency-related parameter in the characteristic parameter corresponding to the first bandwidth part, and characteristic parameters corresponding to the L pieces of characteristic parameter information indicated by the N groups of candidate configuration information each may not be a radio frequency-related parameter in the characteristic parameter corresponding to the first bandwidth part.

The radio frequency-related parameter may mean that when the parameter changes, a radio frequency component in the terminal device needs to be correspondingly adjusted to adapt to a changed parameter. For example, the radio frequency-related parameter may include but is not limited to: a maximum quantity of MIMO layers of the first bandwidth part, a bandwidth of the first bandwidth part, and a center frequency of the first bandwidth part.

The parameter related to a baseband but not related to the radio frequency may mean that when the parameter changes, the baseband in the terminal device needs to be adjusted, and a radio frequency component does not need to be adjusted to adapt to a changed parameter. For example, the baseband-related parameter may include but is not limited to parameters such as a slot scheduling type of the first bandwidth part, a minimum scheduling offset of a PDSCH of the first bandwidth part, a minimum scheduling offset of a PUSCH of the first bandwidth part, and a search space set of the first bandwidth part.

For example, the distinguishing characteristic parameter information indicated by the first information configured by the network device may include the following content:
a maximum quantity of MIMO layers of the first bandwidth part is 2; a bandwidth of the first bandwidth part is 100 MHz; and a center frequency of the first bandwidth part is F1.

The network device configures three groups of candidate configuration information, and the first group of candidate configuration information includes the following content: a slot scheduling type is same-slot scheduling; and a search space set is a set 1. The second group of candidate configuration information includes the following content: a slot scheduling type is cross-slot scheduling; and a search space set is a set 2. The third group of candidate configuration information includes the following content: a slot scheduling type is same-slot scheduling; and a search space set is a set 3.

It is assumed that the terminal device currently works in a second bandwidth part, and a bandwidth of the second bandwidth part is 20 MHz. If an amount of data that needs to be transmitted by the terminal device increases, the network device may indicate the terminal device to switch to a first bandwidth part with a larger bandwidth. The terminal device may predict the first information based on configuration information of the second bandwidth part to determine the configuration information of the first bandwidth part, and does not need to store configuration information of all parameters of the first bandwidth part, thereby reducing storage overheads and improving switching efficiency.

When the terminal device works in the first bandwidth part, if the terminal device expects to change the slot scheduling type and the search space set of the first bandwidth part, but does not want to perform bandwidth part switching, the terminal device may select one of the three groups of candidate configuration information corresponding to the first bandwidth part to take effect, so that bandwidth part switching may not be performed, thereby avoiding a switching delay caused by bandwidth part switching and improving communication efficiency.

According to the foregoing method, during BWP switching, if the terminal device is indicated to switch between the first bandwidth part and the second bandwidth part, and if the terminal device is indicated to switch between the N groups of candidate configuration information, the terminal device only needs to adjust the baseband, and does not need to adjust the radio frequency component. Therefore, data transmission is not interrupted, and communication stability is improved.

In the foregoing embodiments provided in this application, the methods provided in embodiments of this application are separately described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, function modules in embodiments of this application may be integrated into one processor, or each of the modules may exist alone physically, or two or more modules are integrated into one module. The integrated module may be implemented in a form of hardware, or may be implemented in a form of a software functional module.

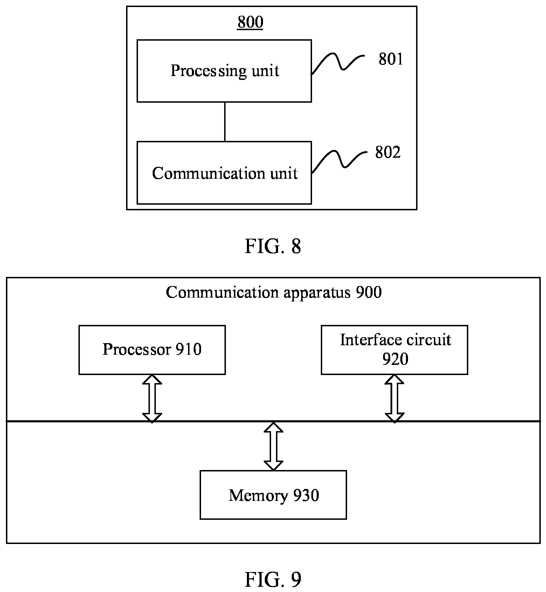

Same as the foregoing concept, as shown in FIG. 8, an embodiment of this application further provides an apparatus 800, configured to implement a function of the network device or the terminal device in the foregoing methods. For example, the apparatus may be a software module or a chip system. In this embodiment of this application, the chip system may include a chip, or may include a chip and another discrete component. The apparatus 800 may include a processing unit 801 and a communication unit 802.

In this embodiment of this application, the communication unit may also be referred to as a transceiver unit, and may include a sending unit and/or a receiving unit, which are respectively configured to perform sending and receiving steps of the network device or the terminal device in the foregoing method embodiments.

The following describes in detail communication apparatuses provided in embodiments of this application with reference to FIG. 8 and FIG. 9. It should be understood that descriptions of apparatus embodiments correspond to the descriptions of method embodiments. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 802 and that is configured to implement the receiving function may be considered as a receiving unit, and a component that is in the communication unit 802 and that is configured to implement the sending function may be considered as a sending unit. That is, the communication unit 802 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 800 performs the function of the terminal device in the procedure shown in FIG. 3 in the foregoing embodiment,
the communication unit is configured to receive first information from a network device, where the first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part; and the processing unit is configured to determine the characteristic parameter information of the first bandwidth part based on the first information and the characteristic parameter information of the second bandwidth part.

When the communication apparatus 800 performs the function of the network device in the procedure shown in FIG. 3 in the foregoing embodiment,
the processing unit is configured to determine first information, where the first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part; and the communication unit is configured to send the first information to the terminal device.

When the communication apparatus 800 performs the function of the network device in the procedure shown in FIG. 6 in the foregoing embodiment,
the processing unit is configured to determine N groups of candidate configuration information, where N is an integer greater than 0, and one of the N groups of candidate configuration information indicates partial characteristic parameter information in the characteristic parameter information of the first bandwidth part; and the communication unit is configured to send the N groups of candidate configuration information to the terminal device.

When the communication apparatus 800 performs the function of the terminal device in the procedure shown in FIG. 6 in the foregoing embodiment,
the communication unit is configured to receive N groups of candidate configuration information from the network device, where N is an integer greater than 0, and one of the N groups of candidate configuration information indicates partial characteristic parameter information in the characteristic parameter information of the first bandwidth part; and the processing unit is configured to determine effective configuration information based on the one of the N groups of candidate configuration information.

The foregoing is merely an example. The processing unit 801 and the communication unit 802 may further perform other functions. For more detailed descriptions, refer to related descriptions in the method embodiments shown in FIG. 3 to FIG. 6. Details are not described herein again.

FIG. 9 shows an apparatus 900 according to an embodiment of this application. The apparatus shown in FIG. 9 may be an implementation of a hardware circuit of the apparatus shown in FIG. 8. The communication apparatus is applicable to the foregoing flowchart, and performs functions of the terminal device or the network device in the foregoing method embodiments. For ease of description, FIG. 9 shows only main components of the communication apparatus.

As shown in FIG. 9, the communication apparatus 900 includes a processor 910 and an interface circuit 920. The processor 910 and the interface circuit 920 are coupled to each other. It can be understood that the interface circuit 920 may be a transceiver or an input/output interface. Optionally, the communication apparatus 900 may further include a memory 930, configured to store instructions executed by the processor 910, or store input data for the processor 910 to run instructions, or store data generated after the processor 910 runs instructions.

When the communication apparatus 900 is configured to implement the methods shown in FIG. 3 to FIG. 6, the processor 910 is configured to implement a function of the processing unit 801, and the interface circuit 920 is configured to implement a function of the communication unit 802.

When the communication apparatus is a chip applied to a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip applied to a network device, the chip in the network device implements functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any regular processor or the like.

In this embodiment of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method is applicable to a terminal device, and the method comprises:
receiving first information from a network device, wherein the first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part; and
determining the characteristic parameter information of the first bandwidth part based on the first information and the characteristic parameter information of the second bandwidth part.

2. The method according to claim 1, wherein the characteristic parameter information of the first bandwidth part and the characteristic parameter information of the second bandwidth part have at least one same item.

3. The method according to claim 1 or 2, wherein the distinguishing characteristic parameter information comprises one or more of the following:
a maximum quantity of multiple-input multiple-output MIMO layers of the first bandwidth part;
a slot scheduling type of the first bandwidth part;
a minimum scheduling offset of a physical downlink shared channel PDSCH of the first bandwidth part;
a minimum scheduling offset of a physical uplink shared channel PUSCH of the first bandwidth part;
a bandwidth of the first bandwidth part;
a center frequency of the first bandwidth part; and
a search space set of the first bandwidth part.

4. The method according to claim 3, wherein the first information further comprises an identifier of the second bandwidth part.

5. The method according to any one of claims 1 to 4, wherein the second bandwidth part is an initial bandwidth part of the terminal device; or
the second bandwidth part is any bandwidth part configured by the network device for the terminal device.

6. The method according to any one of claims 1 to 5, wherein the method further comprises:
receiving second information from the network device, wherein the second information indicates characteristic parameter information of a third bandwidth part, and
a switching delay of switching from the first bandwidth part to the second bandwidth part is less than a switching delay of switching from the first bandwidth part to the third bandwidth part.

7. The method according to any one of claims 1 to 6, wherein the method further comprises:
receiving N groups of candidate configuration information from the network device, wherein N is a positive integer, and
one of the N groups of candidate configuration information indicates partial characteristic parameter information of the first bandwidth part.

8. The method according to claim 7, wherein the N groups of candidate configuration information are configuration information of L characteristic parameters of the first bandwidth part, and L is a positive integer.

9. A communication method, wherein the method is applicable to a network device, and the method comprises:
determining first information, wherein the first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part; and
sending the first information to a terminal device.

10. The method according to claim 9, wherein the characteristic parameter information of the first bandwidth part and the characteristic parameter information of the second bandwidth part have at least one same item.

11. The method according to claim 9 or 10, wherein the distinguishing characteristic parameter information comprises one or more of the following:
a maximum quantity of multiple-input multiple-output MIMO layers of the first bandwidth part;
a slot scheduling type of the first bandwidth part;
a minimum scheduling offset of a physical downlink shared channel PDSCH of the first bandwidth part;
a minimum scheduling offset of a physical uplink shared channel PUSCH of the first bandwidth part;
a bandwidth of the first bandwidth part;
a center frequency of the first bandwidth part; and
a search space set of the first bandwidth part.

12. The method according to claim 11, wherein the first information further comprises an identifier of the second bandwidth part.

13. The method according to any one of claims 9 to 11, wherein the second bandwidth part is an initial bandwidth part of the terminal device; or
the second bandwidth part is any bandwidth part configured by the network device for the terminal device.

14. The method according to any one of claims 9 to 13, wherein the method further comprises:
receiving second information from the network device, wherein the second information indicates characteristic parameter information of a third bandwidth part, and
a switching delay of switching from the first bandwidth part to the second bandwidth part is less than a switching delay of switching from the first bandwidth part to the third bandwidth part.

15. The method according to any one of claims 9 to 14, wherein the method further comprises:
sending N groups of candidate configuration information to the terminal device, wherein N is a positive integer, and
one of the N groups of candidate configuration information indicates partial characteristic parameter information of the first bandwidth part.

16. The method according to claim 15, wherein the N groups of candidate configuration information are configuration information of L characteristic parameters of the first bandwidth part, and L is a positive integer.

17. A communication method, wherein the method is applicable to a network device, and the method comprises:
determining N groups of candidate configuration information, wherein N is an integer greater than 0, and
one of the N groups of candidate configuration information indicates partial characteristic parameter information in the characteristic parameter information of the first bandwidth part; and
sending the N groups of candidate configuration information to a terminal device.

18. The method according to claim 17, wherein the N groups of candidate configuration information are configuration information of L characteristic parameters of the first bandwidth part, and L is an integer greater than 0.

19. The method according to claim 17 or 18, wherein the one of the N groups of candidate configuration information comprises one or more of the following:
a maximum quantity of multiple-input multiple-output MIMO layers of the first bandwidth part;
a slot scheduling type of the first bandwidth part;
a minimum scheduling offset of a physical downlink shared channel PDSCH of the first bandwidth part;
a minimum scheduling offset of a physical uplink shared channel PUSCH of the first bandwidth part;
a bandwidth of the first bandwidth part;
a center frequency of the first bandwidth part; and
a search space set of the first bandwidth part.

20. The method according to any one of claims 17 to 19, wherein the method further comprises:
sending a control instruction to the terminal device, wherein the control instruction instructs to determine effective configuration information based on a first of the N groups of candidate configuration information.

21. A communication method, wherein the method is applicable to a terminal device, and the method comprises:
receiving N groups of candidate configuration information from a network device, wherein N is an integer greater than 0, and
one of the N groups of candidate configuration information indicates partial characteristic parameter information in the characteristic parameter information of the first bandwidth part; and
determining effective configuration information based on the one of the N groups of candidate configuration information.

22. The method according to claim 21, wherein the N groups of candidate configuration information are configuration information of L characteristic parameters of the first bandwidth part, and L is an integer greater than 0.

23. The method according to claim 21 or 22, wherein the one of the N groups of candidate configuration information comprises one or more of the following:
a maximum quantity of multiple-input multiple-output MIMO layers of the first bandwidth part;
a slot scheduling type of the first bandwidth part;
a minimum scheduling offset of a physical downlink shared channel PDSCH of the first bandwidth part;
a minimum scheduling offset of a physical uplink shared channel PUSCH of the first bandwidth part;
a bandwidth of the first bandwidth part;
a center frequency of the first bandwidth part; and
a search space set of the first bandwidth part.

24. The method according to any one of claims 21 to 23, wherein the method further comprises:
receiving a control instruction from the network device, wherein the control instruction instructs to determine the effective configuration information based on a first of the N groups of candidate configuration information.

25. A communication apparatus, comprising:
a communication unit, configured to receive first information from a network device, wherein the first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part; and
a processing unit, configured to determine the characteristic parameter information of the first bandwidth part based on the first information and the characteristic parameter information of the second bandwidth part.

26. The apparatus according to claim 25, wherein the characteristic parameter information of the first bandwidth part and the characteristic parameter information of the second bandwidth part have at least one same item.

27. The apparatus according to claim 25 or 26, wherein the distinguishing characteristic parameter information comprises one or more of the following:
a maximum quantity of multiple-input multiple-output MIMO layers of the first bandwidth part;
a slot scheduling type of the first bandwidth part;
a minimum scheduling offset of a physical downlink shared channel PDSCH of the first bandwidth part;
a minimum scheduling offset of a physical uplink shared channel PUSCH of the first bandwidth part;
a bandwidth of the first bandwidth part;
a center frequency of the first bandwidth part; and
a search space set of the first bandwidth part.

28. The apparatus according to any one of claims 25 to 27, wherein the second bandwidth part is an initial bandwidth part of a terminal device, or the second bandwidth part is any bandwidth part configured for the terminal device.

29. The apparatus according to any one of claims 25 to 28, wherein the communication unit is further configured to:
receive second information from the network device, wherein the second information indicates characteristic parameter information of a third bandwidth part, and
a switching delay of switching from the first bandwidth part to the second bandwidth part is less than a switching delay of switching from the first bandwidth part to the third bandwidth part.

30. The apparatus according to any one of claims 25 to 29, wherein the communication unit is further configured to:
receive N groups of candidate configuration information from the network device, wherein N is a positive integer, and
one of the N groups of candidate configuration information indicates partial characteristic parameter information of the first bandwidth part.

31. The apparatus according to claim 30, wherein the N groups of candidate configuration information are configuration information of L characteristic parameters of the first bandwidth part, and L is a positive integer.

32. A communication apparatus, comprising:
a processing unit, configured to determine first information, wherein the first information indicates distinguishing characteristic parameter information of a first bandwidth part, and the distinguishing characteristic parameter information is characteristic parameter information that is in characteristic parameter information of the first bandwidth part and that is different from characteristic parameter information of a second bandwidth part; and
a communication unit, configured to send the first information to a terminal device.

33. The apparatus according to claim 32, wherein the distinguishing characteristic parameter information comprises one or more of the following:
a maximum quantity of multiple-input multiple-output MIMO layers of the first bandwidth part;
a slot scheduling type of the first bandwidth part;
a minimum scheduling offset of a physical downlink shared channel PDSCH of the first bandwidth part;
a minimum scheduling offset of a physical uplink shared channel PUSCH of the first bandwidth part;
a bandwidth of the first bandwidth part;
a center frequency of the first bandwidth part; and
a search space set of the first bandwidth part.

34. The apparatus according to either of claims 32 or 33, wherein the second bandwidth part is an initial bandwidth part of the terminal device; or
the second bandwidth part is any bandwidth part configured by the network device for the terminal device.

35. The apparatus according to any one of claims 32 to 34, wherein the communication unit is further configured to:
receive second information from the network device, wherein the second information indicates characteristic parameter information of a third bandwidth part, and
a switching delay of switching from the first bandwidth part to the second bandwidth part is less than a switching delay of switching from the first bandwidth part to the third bandwidth part.

36. The apparatus according to any one of claims 32 to 35, wherein the communication unit is further configured to:
send N groups of candidate configuration information to the terminal device, wherein N is a positive integer, and
one of the N groups of candidate configuration information indicates partial characteristic parameter information of the first bandwidth part.

37. The apparatus according to claim 36, wherein the N groups of candidate configuration information are configuration information of L characteristic parameters of the first bandwidth part, and L is a positive integer.

38. A communication apparatus, comprising:
a processing unit, configured to determine N groups of candidate configuration information, wherein N is an integer greater than 0, and
one of the N groups of candidate configuration information indicates partial characteristic parameter information in the characteristic parameter information of the first bandwidth part; and
a communication unit, configured to send the N groups of candidate configuration information to a terminal device.

39. The apparatus according to claim 38, wherein the N groups of candidate configuration information are configuration information of L characteristic parameters of the first bandwidth part, and L is an integer greater than 0.

40. The apparatus according to claim 38 or 39, wherein the one of the N groups of candidate configuration information comprises one or more of the following:
a maximum quantity of multiple-input multiple-output MIMO layers of the first bandwidth part;
a slot scheduling type of the first bandwidth part;
a minimum scheduling offset of a physical downlink shared channel PDSCH of the first bandwidth part;
a minimum scheduling offset of a physical uplink shared channel PUSCH of the first bandwidth part;
a bandwidth of the first bandwidth part;
a center frequency of the first bandwidth part; and
a search space set of the first bandwidth part.

41. The apparatus according to any one of claims 38 to 40, wherein the communication unit is further configured to:
send a control instruction to the terminal device, wherein the control instruction instructs to determine effective configuration information based on a first of the N groups of candidate configuration information.

42. A communication apparatus, comprising:
a communication unit, configured to receive N groups of candidate configuration information from a network device, wherein N is an integer greater than 0, and
one of the N groups of candidate configuration information indicates partial characteristic parameter information in the characteristic parameter information of the first bandwidth part; and
a processing unit, configured to determine effective configuration information based on the one of the N groups of candidate configuration information.

43. The apparatus according to claim 42, wherein the one of the N groups of candidate configuration information comprises one or more of the following:
a maximum quantity of multiple-input multiple-output MIMO layers of the first bandwidth part;
a slot scheduling type of the first bandwidth part;
a minimum scheduling offset of a physical downlink shared channel PDSCH of the first bandwidth part;
a minimum scheduling offset of a physical uplink shared channel PUSCH of the first bandwidth part;
a bandwidth of the first bandwidth part;
a center frequency of the first bandwidth part; and
a search space set of the first bandwidth part.

44. The apparatus according to claim 42 or 43, wherein the apparatus further comprises:
receiving a control instruction from the network device, wherein the control instruction instructs to determine the effective configuration information based on a first of the N groups of candidate configuration information.

45. A communication apparatus, comprising a processor and a memory, wherein
the processor is configured to execute a computer program or instructions stored in the memory, and when the processor executes the computer program or instructions, the method according to any one of claims 1 to 24 is performed.

46. A computer-readable storage medium, comprising instructions, wherein when the instructions are run on a computer, the computer is enabled to perform the method according to any one of claims 1 to 24.

47. A computer program product, comprising computer-readable instructions, wherein when a communication apparatus reads and executes the computer-readable instructions, the communication apparatus is enabled to perform the method according to any one of claims 1 to 24.
